(19) Europäisches Patentamt
European Patent Office
Office européen des brevets

(11) **EP 3 527 453 B1**

(12) **EUROPEAN PATENT SPECIFICATION**

(45) Date of publication and mention
of the grant of the patent:
**24.03.2021  Bulletin 2021/12**

(51) Int Cl.:
***B60W 40/11*** *(2012.01)*      ***B60Q 1/115*** *(2006.01)*
***B60W 50/00*** *(2006.01)*

(21) Application number: **19156679.3**

(22) Date of filing: **12.02.2019**

(54) **AUTONOMOUS METHOD AND DEVICE FOR DETERMINING A GLOBAL INCLINATION OF A MOTOR VEHICLE**

AUTONOMES VERFAHREN UND VORRICHTUNG ZUR BESTIMMUNG DER GLOBALEN NEIGUNG EINES KRAFTFAHRZEUGS

PROCÉDÉ AUTONOME ET DISPOSITIF DE DÉTERMINATION D'UNE INCLINAISON GLOBALE D'UN VÉHICULE À MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **14.02.2018   FR 1851247**

(43) Date of publication of application:
**21.08.2019   Bulletin 2019/34**

(73) Proprietor: **AML Systems**
**75008 Paris (FR)**

(72) Inventor: **Dupont, Frédéric André Jules**
**92100 Boulogne Billancourt (FR)**

(74) Representative: **Hocking, Adrian Niall et al**
**Albright IP Limited**
**County House**
**Bayshill Road**
**Cheltenham, Glos. GL50 3BA (GB)**

(56) References cited:
**EP-A1- 2 963 385      EP-A2- 2 447 127**
**EP-A2- 2 724 889      GB-A- 2 536 008**

**Description**

FIELD

The present invention relates in particular to an automatic method and device for determining at least one inclination of a motor vehicle and for correcting variations of the latter relative to a point of reference.

BACKGROUND

In particular, to correct the beam path of a light of a motor vehicle, it may be necessary to know exact variations in the inclination of the motor vehicle relative to a point of reference. Within the scope of the present invention, the inclination (referred in the following to as the "global inclination") illustrates the angle between a reference longitudinal axis of the chassis of the motor vehicle and a reference longitudinal axis of the road on which the wheels of the axle of the motor vehicle rest. Indeed, as a function of the load distribution in the vehicle and its suspension, the inclination can vary such that the emission angle of a beam path of a lamp can be modified. It is known that regulations prohibit raising the beam path of the lights too high in certain road conditions, specifically with dipped beam lights, in particular to avoid glare from a vehicle driving in the opposite direction. Consequently, modifying the emission angle of a light beam, in particular because of a particular load distribution in the vehicle, can cause unauthorised glare in some cases. In this case it is necessary to make a correction.

To determine the inclination of the vehicle, inclination sensors are known. At least one and generally at least two inclination sensors are provided in a motor vehicle. Such inclination sensors generally comprise a measurement calculating element connected to two arms which are articulated and which are joined respectively to a calculating element connected to the chassis and to a calculating element connected to the axle. Such inclination sensors are expensive, are complicated to install and require a lot of space.

Furthermore, to reduce this cost it is beneficial to be able to determine the inclination of the motor vehicle by using other means.

From document EP-2 724 889, a device for controlling a light of a motor vehicle is known. This document describes in particular a method for determining an inclination of the motor vehicle. To determine the inclination this method uses the affine relationship which links measurements of vertical and longitudinal accelerations. Such a method uses data measured directly by an acceleration sensor in three orthogonal axes during at least one acceleration phase of the motor vehicle and one deceleration phase of the motor vehicle. Other examples of such devices are disclosed in EP2963385A1, EP2447127A2, and GB2536008A.

However, determining an inclination in a precise manner means that it is necessary to acquire and/or process data, taking into account certain workable parameters of a motor vehicle (suspension, vibration of engine, ...), which is complex and expensive.

SUMMARY

The objective of the invention is to overcome this disadvantage, by proposing a method for determining a global inclination of a motor vehicle when driving on a road, of the motor vehicle along a trajectory, a method which makes it possible to determine and provide a particularly precise value for the inclination and to perform this in an automatic manner.

In this regard, the automatic method for determining at least one global inclination of a motor vehicle when driving along a trajectory, said global inclination illustrating the angle between a reference longitudinal axis of the chassis of the motor vehicle and a reference longitudinal axis of the road on which the wheels of the axle of the motor vehicle rest, is remarkable in that it comprises:

- a measuring step performed by means of at least two accelerometers arranged on the chassis, the two accelerometers being configured to measure over time respectively a so-called longitudinal acceleration and a so-called vertical acceleration of the motor vehicle, the measuring step consisting of measuring a plurality of pairs of successive measurements, each pair of measurements comprising a measured longitudinal acceleration and a measured vertical acceleration;

- a calculating step performed by a calculating unit and consisting of calculating the global inclination of the vehicle exclusively by means of pairs of measurements measured in the measuring step, said calculating step taking into account that the vertical acceleration and the longitudinal acceleration are linked together by an affine function, of which a coefficient of proportionality depends on a point-inclination for a constant road gradient, said calculating step comprising a series of successive substeps, implemented in an iterative manner and comprising:
a first calculating substep consisting of performing a linear regression, by means of a plurality of pairs of measurements in order to determine a coefficient of proportionality;

- a second calculating substep consisting of estimating a point-inclination from said coefficient of proportionality determined in the first calculating substep;
- a third calculating substep consisting of calculating an estimation quality value of the point-inclination estimated in the second calculating substep; and
- a fourth calculating substep consisting of determining, with each iteration, a current global inclination, from the set of estimation quality values and calculated point-inclinations and estimated in preceding iterations, the current global inclination calculated in the last iteration representing said global angle .

Thus, by means of the invention, it is possible to determine in a very precise manner the global inclination of a motor vehicle when driving along a trajectory by calculating the quality of the estimation of the inclination. Furthermore, the use of information on the quality of the method makes it possible to rapidly determine a global inclination. These advantages make it possible to overcome the aforementioned disadvantage.

Advantageously, the measuring step also comprises a step of correcting the values of vertical acceleration of the pairs of measurements, performed by a correction module, in order to obtain and provide in the measuring step pairs of corrected measurements.

Moreover, the calculating step also comprises a selection step, performed by a selection module before the first calculating substep, consisting of selecting a plurality of pairs of successive measurements from said pairs of measurements measured in the measuring step in order to form a data set, said data set being determined by one or more predetermined selection criteria.

In an advantageous manner, the selection criterion or criteria of a data set from a succession of pairs of measurements comprises at least one of the following criteria:

- a number of pairs of successive measurements is greater than a predetermined number of pairs of measurements;
- a succession of pairs of measurement represents a time range that is lower than a predetermined time limit;
- the longitudinal acceleration values of the pairs of successive measurements are increasing or decreasing;
- a range of longitudinal acceleration values of pairs of successive measurements is greater than a predetermined variation value;
- a tolerance value of the time regularity of the successive measurements of longitudinal accelerations is lower than a predetermined tolerance value.

Furthermore, in a preferred manner, the calculating step comprises a partitioning step, performed by a partitioning module between the selection step and the first calculating substep, consisting of partitioning the data set into a plurality of data subsets and calculating the average of the data of each data subset, the averages of the data obtained in this way being used in the first calculating substep as pairs of measurements.

In a particular embodiment, the fourth calculating substep consists of determining a value of said global inclination by calculating the weighted average of point-inclinations, said point-inclinations each being weighted by an associated estimation quality value, calculated in the third calculating substep.

In another embodiment, the fourth calculating substep consists of determining a value of said global inclination by using a Kalman filter.

Furthermore, the calculating step comprises a fifth calculating substep consisting of calculating a global estimation quality from the estimation quality values calculated in preceding iterations.

Thus, the global estimation quality provides information on the quality of the measurement of the global inclination associated therewith. Said auto-evaluation makes it possible, inter alia, to choose whether or not to take into account a measurement of the global inclination as a function of the global estimation quality in order to limit the consequences of unreliable measurements for controlling the headlights, particularly in difficult conditions.

In a particular embodiment, the fifth calculating substep consists of calculating a value of said global estimation quality defined by the sum of the estimation quality values calculated in the third calculating substep.

In another embodiment, the fifth calculating substep consists of calculating a value of said global estimation value defined by the average of the estimation quality values calculated in the third calculating substep.

Preferably, the linear regression performed in the first substep of the calculating step is based on a method of the lowest p-percentile of squared residuals.

Furthermore, the measuring step also comprises a step of filtering the measurement pairs, performed by a filter, and consisting, in order to obtain pairs of filtered measurements, of eliminating interference with the measurement of pairs of measurements, generated by:

- statistical noise coming from the accelerometer of the measuring unit;
- vibrations from the engine of the motor vehicle.

In an advantageous manner the measuring step also consists of measuring, by means of at least one gyrometer, a gyroscopic value, said gyroscopic value measured in the measuring step being used in the calculating step at least for eliminating changes in the trajectory of the motor vehicle on the road, the gyroscopic value of which is greater than a predetermined threshold value.

In a particular embodiment, said method also comprises:

- an auxiliary calculating step consisting of calculating a correction value of a lighting angle of a lamp of the motor vehicle, by means of the global inclination of the motor vehicle calculated in said calculating step; and
- a transmission step consisting of transmitting said correction value to a correcting calculating element able to correct the lighting angle of the lamp of the motor vehicle.

The present invention also relates to a device for determining autonomously at least one so-called global inclination of a motor vehicle when driving along a trajectory on a road.

According to the invention, said device comprises:

- a measuring unit comprising at least one set of accelerometers, said set of accelerometers comprising at least two accelerometers arranged on the chassis of a motor vehicle, the two accelerometers being configured for measuring over time respectively, a so-called longitudinal acceleration and a so-called vertical acceleration of the motor vehicle, the measuring unit being configured to measure a plurality of successive pairs of measurements, each pair of measurements comprising a measured longitudinal acceleration and a measured vertical acceleration;
- a calculating unit configured to calculate the global inclination of the vehicle exclusively by means of pairs of measurements measured by the measuring unit, said calculating unit taking into consideration that the vertical acceleration and the longitudinal acceleration are linked together by an affine function, of which a coefficient of proportionality depends on a point-inclination for a constant slope of a road, the calculating unit comprising:

  - a first calculating element configured to perform a linear regression, by means of a plurality of pairs of measurements in order to a determine a coefficient of proportionality;
  - a second calculating element configured to estimate a point-like angle, from said coefficient of proportionality determined by the first calculating element;
  - a third calculating element configured to calculate an estimation quality value of the point-inclination estimated by the second calculating element; and
  - a fourth calculating element configured to calculate a current global inclination from the set of estimation quality values and point-inclinations calculated and estimated during a plurality of successive iterations, the current global inclination calculated in the last iteration representing said global inclination.

Advantageously, the calculating unit also comprises a selection module configured for selecting a succession of pairs of measurements from said pairs of measurements measured by the measuring unit in order to form a data set, said data set being determined by one or more predetermined selection criteria and a partitioning module configured for partitioning the data set into a plurality of data subsets and for calculating the average of the data of each data subset, the averages of the data obtained in this way thus being used by the first calculating element of the calculating unit as pairs of measurements.

In a particular embodiment, the device also comprises:

- an auxiliary calculating unit configured for calculating a correction value of a lighting angle of a lamp of the motor vehicle, by means of the global inclination of the motor vehicle calculated by said calculating unit; and
- a transmission link configured for transmitting said correction value to at least one corrector calculating element which is able to correct the lighting angle of the lamp of the motor vehicle.

Furthermore, the calculating unit also comprises a fifth calculating element configured to calculate a global estimation quality from the estimation quality values calculated during a plurality of successive iterations.

Preferably, the measuring unit also comprises at least one of the following elements:

- a third accelerometer configured for measuring a lateral acceleration, which is orthogonal to said vertical and longitudinal accelerations;
- at least one gyrometer.

Furthermore, the invention also relates to a system for correcting a lighting angle of a lamp of the motor vehicle, said system comprising a device as described above, and at least one correction calculating element able to correct the lighting angle of the lamp of the motor vehicle.

Furthermore, the invention relates to a lamp for a motor vehicle, which is remarkable in that it comprises at least one such system for correcting the lighting angle.

BRIEF DESCRIPTION OF THE DRAWINGS

The invention is explained and other objectives, details, features and advantages of the latter are clarified in the following detailed description of embodiments of the invention, which are given by way of example in a purely illustrative and non-restrictive manner, with reference to the accompanying schematic drawings. In said drawings:

- figure 1 is the synoptic diagram of a particular embodiment of a device according to the invention;
- figure 2 shows a motor vehicle driving along a slope, to which the invention is applied;
- figure 3 is a diagram representing fluctuations in the value of the inclination about an equilibrium value;
- figure 4 is a synoptic diagram of a particular embodiment of a method according to the invention;
- figure 5 represents the behaviour of the vertical acceleration of the motor vehicle as a function of longitudinal acceleration; and
- figure 6 represents the evolution over time of the point-inclination, of the corresponding estimation quality and the global inclination.

DETAILED DESCRIPTION

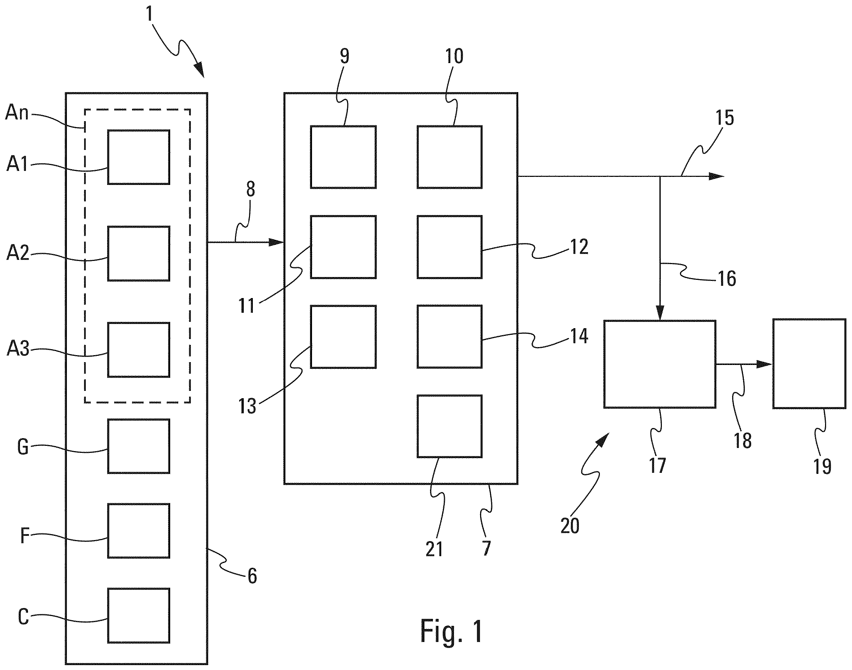

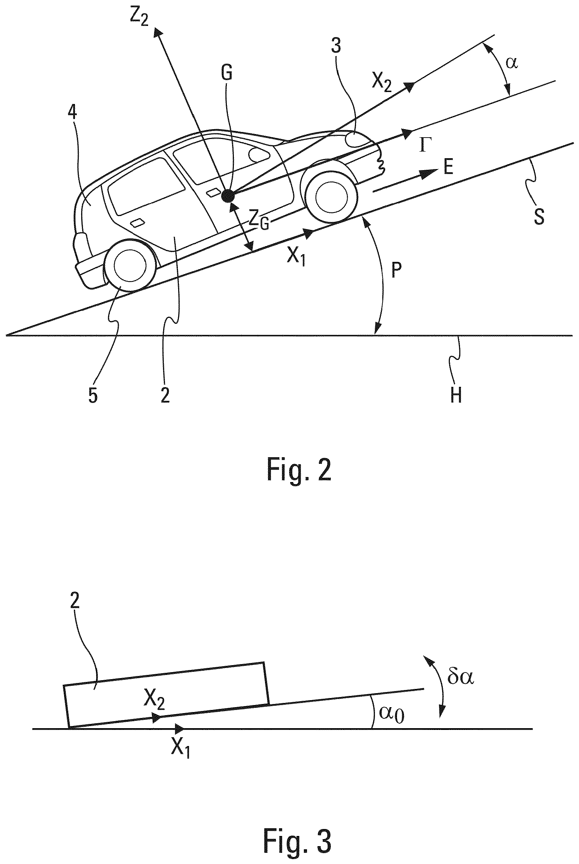

The device 1 illustrating the invention and represented schematically in figure 1 is designed to determine (at least) the inclination $\alpha$ referred to as the global inclination of a motor vehicle 2 as represented in figure 2 and to correct the variations of an inclination relative to a reference point.

In particular, as specified below, this information (global inclination $\alpha$) can be used specifically to perform a correction of the beam path of a lamp 3 of the motor vehicle 2.

Within the scope of the present invention, the global inclination $\alpha$ illustrates the angle between a reference longitudinal axis $X_1$ of the road on which the wheels of the axles rest (in the following "longitudinal reference axis of the road") and a reference longitudinal axis $X_2$ of the chassis of the motor vehicle 2, as represented in figure 2. In a general manner, it is noted that the chassis of the motor vehicle 2 comprising the passenger compartment 4 is connected to the axle provided of the wheels 5 touching the road S, via a suspension system. The reference longitudinal axes $X_1$ and $X_2$ are defined in a vertical plane of symmetry of the motor vehicle 2 of the vertical axis $Z_2$, according to a horizontal direction when the axle and the chassis are positioned horizontally respectively. The reference longitudinal axis $X_2$ of the chassis and the reference longitudinal axis $X_1$ of the road can be confused when the global inclination $\alpha$ is zero or spaced apart angularly in the vertical plane of symmetry by an angle corresponding to the global inclination $\alpha$, as represented in figure 2.

In the example of figure 2, the motor vehicle 2 drives on a road S along a trajectory in the direction illustrated by an arrow E. The road S is inclined (upwards) by an angle P referred to as a slope, relative to the horizontal H.

According to the invention, said device 1 comprises, as shown in figure 1:

- a measuring unit 6 comprising a set of accelerometers An. Said set comprises at least two accelerometers A1 and A2 joined to the chassis of the motor vehicle 2. The two accelerometers A1 and A2 are configured to measure, respectively, an so-called longitudinal acceleration Ax (which is defined according to an axis X corresponding to the reference longitudinal axis $X_2$) and a so-called vertical acceleration Az (which is defined according to an axis Z which is orthogonal to the axis X in the vertical plane of symmetry of the motor vehicle 2). Furthermore, the measuring unit 6 is configured to measure a plurality of pairs of successive measurements, each pair of measurements comprising at least one longitudinal acceleration Ax measured by the accelerometer A1 and one vertical acceleration Az measured bv the accelerometer A2; and
- a calculating unit 7 connected by a link 8 to the measuring unit 6 and configured to calculate the global inclination $\alpha$ of the motor vehicle 2 exclusively by means of measures performed by the measuring unit 6.

The two accelerometers A1 and A2 are arranged substantially orthogonally in a rigid manner on the chassis of the motor vehicle 2.

As shown in figure 2, a motor vehicle 2 in a driving phase on the road S along a trajectory is subject to acceleration

$$\Gamma = \begin{pmatrix} Ax \\ Az \end{pmatrix}$$

in two dimensions comprising a longitudinal acceleration Ax and a vertical acceleration Az. The longitudinal acceleration Ax and the vertical acceleration Az are measured by the accelerometers A1 and A2 and verify respectively the following equations:

$$Ax = -\cos\alpha.(\sin P + \Gamma) + \sin\alpha.\left(\cos P + \ddot{Z}_G\right)$$

$$Az = -\sin\alpha.(\sin P + \Gamma) + \cos\alpha.\left(\cos P + \ddot{Z}_G\right)$$

where the parameter $\ddot{Z}_G$ represents the double time derivative of the distance $Z_G$ between the centre of gravity G of the motor vehicle 2 and the road S. In a driving phase, the parameter $\ddot{Z}_G$ depends on the suspensions of the motor vehicle 2 and its acceleration $\Gamma$.

Cos, sin and tan are respectively the cosine, sine and tangent function.

Thus the longitudinal acceleration Ax and the vertical acceleration Az are linked by the following expression:

$$Az = -\tan\alpha.Ax + \frac{(\cos P + \ddot{Z}_G)}{\cos\alpha}$$

**As** shown in figure 3, the global inclination $\alpha$ fluctuates around an inclination value $\alpha_0$. These fluctuations $\delta\alpha$ may be caused by accelerations of the motor vehicle 2, decelerations of the motor vehicle 2 and/or by a change in the value of the slope P of the road S. The global inclination $\alpha$ verifies the following relationship:

$$\alpha = \alpha_0 + \delta\alpha$$

where $\delta\alpha = \mu_g . (\Gamma + \sin P)$. The parameter $\mu_g$ depends, inter alia, on the mass of the motor vehicle 2, and represents the effect of the suspensions. The value of the parameter $\mu_g$ is known and may, in particular, be provided by the car manufacturer. This parameter $\mu_g$ appears in the non-linear relationship between the vertical acceleration Az and longitudinal acceleration Ax:

$$Az = \frac{-\alpha_0}{(1+\mu_g)^2} Ax - \frac{\mu_g\left(1+\frac{\mu_g}{2}\right)}{(1+\mu_g)^2} Ax^2 + \ddot{Z}_G + 1$$

**As** shown in figure 1, in a particular embodiment, the measuring unit 6 comprises a correction module C. Said correction module C is configured to correct the values of vertical acceleration Az in order that the plurality of pairs of measurements measured by the measuring unit 6 comprise a corrected vertical acceleration $\widetilde{Az}$ and a longitudinal acceleration Ax. The corrected vertical acceleration $\widetilde{Az}$ and the longitudinal acceleration Ax are linked together by an affine function via a coefficient of proportionality depending on the value of the inclination $\alpha_0$, as specified below:

$$\widetilde{Az} = \frac{-\alpha_0}{(1+\mu_g)^2} Ax + 1$$

Furthermore, the measuring unit 6 comprises a filtering module F performing the filtering of pairs of measurements provided by the correction module C. This filtering module F is configured to eliminate interference in the pairs of measurements and provide pairs of filtered measurements. The corresponding interference corresponds, for example, to frequency resonance phenomena caused by engine vibrations of the motor vehicle 2. The interference can also originate from the statistical noise of measurements performed by accelerometers A1 and A2. The interference can also originate from the presence of passengers in the motor vehicle or from condition of the road. For this purpose, the filtering module F comprises a medium filter or a Butterworth filter.

Furthermore, the measuring unit 6 also comprises at least one gyrometer G for measuring a gyroscopic value. In one embodiment, said gyroscopic value corresponds to an angular speed, the value of which is compared to a threshold value, for example 0.12 rad/sec. When the value of the angular speed is greater than said threshold value, the measuring unit 6 deduces that the trajectory of the motor vehicle 2 on the road S changes rapidly according to the vertical and/or longitudinal axes. These changes in trajectory correspond, inter alia, to curves at a roundabout, a speed bump,... The measuring unit 6 eliminates pairs of successive measurements, measured simultaneously by accelerometers A1 and A2, which represent this type of change of trajectory. When the value of the angular speed measured by the gyroscope G is lower than or equal to the threshold value, the measuring unit 6 retains the pairs of measurements measured simultaneously by the accelerometers A1 and A2.

In one embodiment, the calculating unit 7 comprises a selection module 9 and a partitioning module 10 arranged in succession. The selection module 9 is configured to select a plurality of pairs of measurements from the pairs of measurements filtered by the filter F of the measuring unit 6 in order to form a data set.

**The** formation of a data set depends on one or more predetermined selection criteria. Thus, the number of pairs of successive filtered measurements which forms a data set has to be greater than a number of predetermined pairs of measurements. In a non-limiting manner, the number of predetermined pairs of measurements is greater than or equal to 30.

Furthermore, the data set comprises pairs of filtered measurements measured by the measuring unit 6 during a time range which is shorter than a predetermined time limit. By way of example, the time limit is 20 seconds.

Moreover, the values of the longitudinal acceleration of pairs of successive measurements that the measuring unit 6 retains have to be increasing, for example. This condition implies a positive jerk (derived from the acceleration). The values of longitudinal acceleration of the pairs of successive measurements retained by the measuring unit 6, can also all be decreasing. In this case, this condition implies a negative jerk. In addition, the range of values of the longitudinal acceleration Ax of pairs of successive measurements has to be greater than a predetermined variation value. Said predetermined variation is between 0.01g and 0.1g. This selection criterion makes it possible to ensure that the variations of the acceleration values of pairs of successive measurements are not due to structural problems of the set of accelerometers An.

Furthermore, a tolerance value of the temporal regularity of successive measurements of longitudinal accelerations Ax has to be lower than a predetermined tolerance value. Said tolerance value is between 0.01 seconds and 0.2 seconds. This selection criterion implies that a data set can be formed from pairs of measurements which have not been measured in a successive manner by the measuring unit 6. This tolerance makes it possible to adapt the number of data sets from which the calculating unit 7 calculates a global inclination $\alpha$ in a precise manner as a function of its digital resources.

The partitioning module 10 is configured to partition the data set into a specific number Np of data subsets, each comprising a plurality of pairs of filtered measurements. The partitioning module 10 is also configured to calculate the average of the corrected vertical accelerations $\widetilde{A_Z}$ and the average of the longitudinal accelerations Ax of each data subset. The averaged vertical corrected acceleration $\widetilde{A_Z}$ and longitudinal acceleration Ax obtained in this way then form the data used by the calculating unit 7 as pairs of measurements.

In a preferred embodiment, the calculating unit 7 considers that the corresponding corrected vertical acceleration $\widetilde{A_Z}$ and longitudinal acceleration Ax are linked by the affine relationship:

$$\widetilde{Az} = a\,Ax + b$$

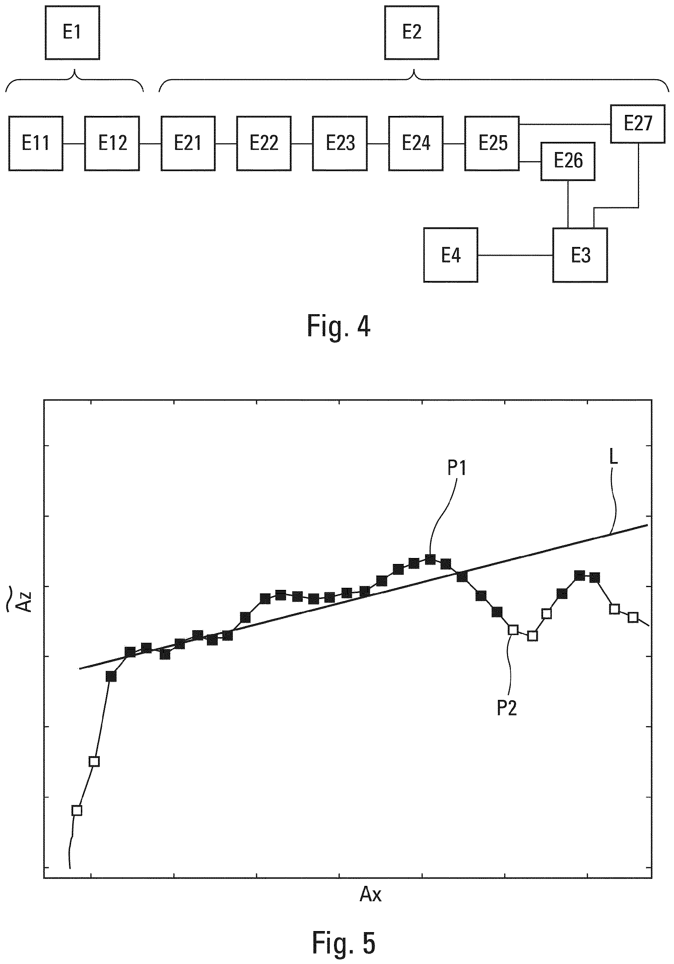

where the coefficient represents the slope of a straight line L, graphic representation of the preceding affine relationship (cf. figure 5).

The calculating unit 7 comprises a calculating element 11 configured to perform a simple, linear regression calculation by means of data provided by the partitioning module 10. The calculation of linear regression is based on a method of the lowest p-percentile of squared residuals which consists of calculating the coefficients a and b of the straight line L (cf. figure 5) for which a percentile of p% of the data minimises the square of the residuals of the data. In one embodiment, this percentile corresponds to a value of p equal to 50%. The method corresponds to the method of the lowest median of the squared residuals. In another embodiment, this percentile is replaced by 70%. The method corresponds to a method of the lowest 70 percentile of squared residuals.

The calculating unit 7 also comprises a calculating element 12 configured to estimate a so-called inclination

$$a = \frac{-\alpha_0}{(1+\mu_g)^2}\,.$$

from the value of the coefficient a and of the parameter $\mu_g$, via the relationship

The calculating unit 7 also comprises a calculating element 13 configured to calculate an estimation quality value q of the point-inclination estimated by the calculating element 12. The estimation quality value is proportional to an increasing function of the number of subsets Np provided by the partitioning module 10 and to a decreasing function of the maximum of the absolute value of the median of the remaining residuals $\Delta$.

Furthermore, the calculating element 13 of the calculating unit 7 provides, to a calculating element 14 of the calculating unit 7, estimation quality values Q of the point-inclination as well as the values of the corresponding point-inclination. The calculating element 14 is then configured to calculate the global inclination $\alpha$ from the weighted average of the point-inclinations obtained during preceding iterations, the point-inclinations being weighted by the value of the estimation qualities Q which are associated with them.

The global inclination $\alpha$, determined in the manner specified above by the calculating unit 7, can be transmitted to a calculating element or user system, via a link 15 (figure 1).

In addition, the calculating element 13 of the calculating unit 7 provides estimation quality values Q to a calculating element 21 of the calculating unit 7. The calculating element 21 is configured to calculate global estimation quality value from estimation quality values Q after a defined number of iterations. By way of example, the global estimation quality value corresponds to the sum of estimation quality values Q after 20 iterations. The global estimation quality value can also correspond to the average of estimation quality values Q after a defined number of operations.

Furthermore, in a particular embodiment, the device 1 also comprises, as shown in figure 1:

- an auxiliary calculating unit 17 configured to calculate a correction value of an inclination of a lamp 3 of the motor vehicle 2 (figure 2). To achieve this the auxiliary calculating unit 17 uses the global inclination $\alpha$ of the motor vehicle 2 calculated by the calculating unit 7, which is received via a link 16; and
- a transmission link 18 configured for transmitting said correction value to at least one usual corrective calculating element 19, which is able to correct the inclination of the lamp 3 according to said correction value.

**The** auxiliary calculating unit 17 can be integrated into the calculating unit 7.

In a particular embodiment, the measuring unit 6 also comprises an accelerometer A3 which is configured to measure a lateral acceleration Ay. Said lateral acceleration Ay is by definition measured according to a Y axis (not shown) which is orthogonal to axes $X_2$ and $Z_2$.

The device 1 can form part of a correction system 20 represented partially in figure 1 and designed to correct in an automatic and autonomous manner an inclination of a lamp 3 of the motor vehicle 2.

The correction system 20 comprises in addition a device 1, at least one corrective calculating element 19 being able to correct, in the usual manner, the inclination of the lamp 3 of the motor vehicle 2 by means of a correction value received from said device 1 via the transmission link 18.

Furthermore, the present invention also relates to a lamp 3 which in addition to its usual elements (light source,...), comprises at least one such system 20 for correcting the inclination.

In addition, the accelerometers A1, A2 and A3 are micro-electromechanical systems (MEMS). The accelerometers A1, A2 and A3 can provide information at a rate of 1 kHz and the gyrometer G at a rate of 8kHz.

Preferably, the measuring unit 6 only uses a sample of information from the accelerometers A1, A2, and A3 and from the gyrometer G so as not to saturate its digital resources. By way of example, the sampling by means of the measuring unit 6 is performed at a rate between 50 Hz and 200 Hz.

Furthermore, in a preferred embodiment, the accelerometers A1, A2 and A3 (or A1 and A2 alone) form part of the same system of accelerometric measurement An of the three axes type (or two axes). Additionally, the calculating unit 7 is integrated into an electronic card associated with said measuring system.

The device 1, as described above, implements, in an automatic manner, the general steps of the method represented in figure 4:

- a measuring step E1 consisting of measuring, by means of accelerometers A1 and A2, a plurality of pairs of successive measurements over time, each pair of measurements being formed by a measured vertical acceleration Az and a measured longitudinal acceleration Ax; and
- a calculating step E2 consisting of calculating the global inclination $\alpha$, by means of pairs of measurements made in the measuring step E1. The calculating step E2 considers that the vertical acceleration Az and longitudinal acceleration Ax are linked by an affine function, for which the coefficient of proportionality depends on the global inclination $\alpha$.

As explained above, the accelerometers A1 and A2 measure respectively the longitudinal acceleration Ax and the vertical acceleration Az taking into account realistic phenomena such as the suspension of the motor vehicle 2. In order to obtain an affine relationship between the vertical acceleration Az and longitudinal acceleration Ax values, the vertical acceleration Az values of pairs of measurements obtained are corrected in a correction step E11, in particular by knowledge of parameter $\mu_g$ which takes into account the effects of the suspensions of the motor vehicle 2.

The pairs of measurements comprise the corrected vertical accelerations $\widetilde{A_Z}$ and the longitudinal accelerations Ax are then filtered by the filtering module F in a filtering step E12 in order to form a plurality of pairs of filtered measurements. The filters used in the filtering step E12 are second order filters 2 or second order filters 5. The order filters can be replaced by Butterworth filters.

The measurements of a gyroscopic value, for example an angular speed, are performed by the gyroscope G, simultaneously to the measurements performed by the accelerometers A1 and A2. If the angular speed measured by the gyroscope G is greater than the predetermined threshold value, the pairs of measurements corresponding to the measurements performed by the accelerometers A1 and A2 are eliminated from the plurality of pairs of filtered measurements. On the contrary, if the angular speed measured by the gyroscope G is lower than the predetermined threshold value, the pairs of measurements corresponding to the measurements performed by the accelerometers A1 and A2 are retained. During a selection step E21, some of the pairs of filtered measurements, of the pairs of filtered measurements are selected by the selection module 9, depending on whether or not they satisfy at least one selection criterion of the selection criteria detailed above. The selection criteria are independent of one another.

The following steps are performed in an iterative manner.

In a partitioning step E22, the pairs of filtered and selected measurements form a data set which is partitioned by the partitioning module 10, into a number of data subsets Np. Then an average is formed of the values of pairs of filtered measurements of each subset. Said partitioning step E22 makes it possible to reduce the volume of data P1 and P2 (figure 5) to be processed in the calculating step E2. The number of data subsets Np is determined by the total number of pairs of measurements which form the data set as well as by the maximum range of values of longitudinal acceleration Ax.

A step of calculating E23 simple linear regression is then performed on the corrected vertical averaged accelerations $\widetilde{A_Z}$ and the longitudinal averaged accelerations Ax which form the data set obtained after the partitioning step E22. This calculating step E23 is based on a method of minimising the p-percentile of the squared residuals of data P2. By way of example, this p-percentile can represent the median. It can also be 70%. As shown in figure 5, the method seeks the coefficients a and b of the straight line L which minimises the squared residuals of 70% of data (black squares P1). Thus, 30% of data is not considered (white squares P2). The method of the lowest median of the squared residuals make it possible for the results to be precise by reducing the impact of so-called aberrant data. Aberrant data are, for example, accumulations of corrected vertical acceleration values $\widetilde{A_Z}$ for the same value of longitudinal acceleration Ax, when the motor vehicle 2 is the stopped on the road S or when the road S has a steep slope. The calculating step E23 also determines the maximum difference from the squares residuals $\Delta^2$.

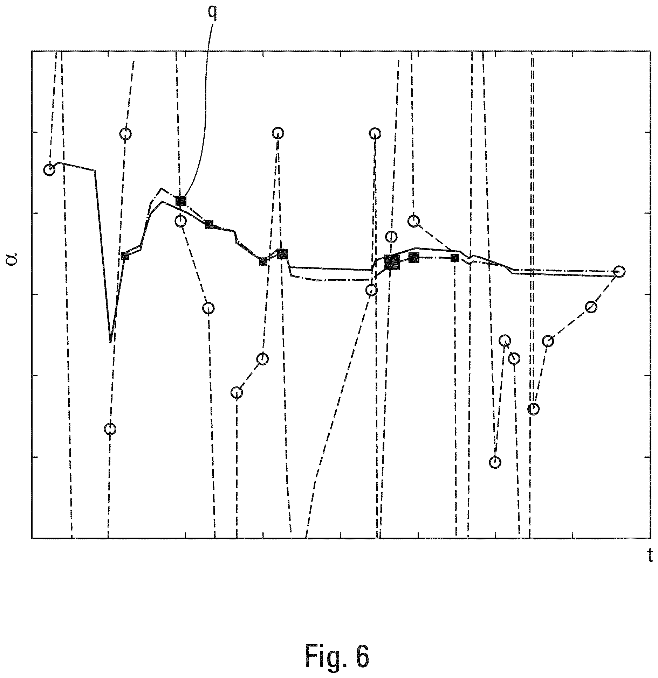

A value of the point-inclination is then deducted from the result of the coefficient of proportionality a during a calculating step E24 via the relationship $a = \dfrac{-\alpha_0}{(1+\mu_g)^2}$. The values of the point-like successive inclinations are represented by the rings in figure 6.

During a calculating step E25, an estimation quality value q of the point-inclination, estimated in the preceding calculating step E24, is calculated. The estimation quality q is obtained from the number of data subsets Np determined during the partitioning step E22 as well as from the maximum difference from the squared residuals $\Delta^2$, as detailed above.

In a calculating step E26, the weighted average of the point-inclinations estimated in the preceding steps E24 is calculated, the value of each point-inclination being weighted by the corresponding estimation quality value q. The result of the weighted average is the global inclination $\alpha$ (points or black squares in figure 6).

The global inclination $\alpha$ obtained with each iteration of the preceding successive steps is transmitted to the auxiliary calculating unit 13, which, during an auxiliary calculating step, uses the value of the global inclination $\alpha$ received to calculate a correction value of the lighting angle of the lamp 3 of the vehicle 2. Said correction value is then transmitted, during a transmission step to a correction element which is able to correct the lighting angle of the lamp 3 of the motor vehicle 2.

Furthermore, during a calculating step E27, a sum of several estimation quality values Q calculated in calculating step E25 is calculated. The number of estimation quality values Q corresponds to a defined number of iterations. By way of example, this defined number of iterations can equal 20. The result of the sum of estimation quality values Q represents a global estimation quality value.

**Claims**

1. An automatic method for determining at least one so-called global inclination of a motor vehicle (2) when driving along a trajectory on a road (S), said global inclination ($\alpha$) illustrating the angle between a reference longitudinal axis of the chassis (X2) of the motor vehicle (2) and a reference longitudinal axis of the road (S) on which the wheels of the axle (X1) of the motor vehicle (2) rest, said method comprising:

   - a measuring step (E1) performed by means of at least two accelerometers (A1, A2) arranged on the chassis, the two accelerometers (A1, A2) being configured to measure over time, respectively, a so-called longitudinal acceleration and a so-called vertical acceleration of the motor vehicle (2), the measuring step consisting of measuring a plurality of pairs of successive measurements, each pair of measurements comprising a measured longitudinal acceleration and a measured vertical acceleration;
   - a calculating step (E2) performed by a calculating unit (7) and consisting of calculating the global inclination ($\alpha$) of the vehicle (2) exclusively by means of pairs of measurements measured in the measuring step (E1), said calculating step (E2) taking into account that the vertical acceleration and the longitudinal acceleration are linked by an affine function of which a coefficient of proportionality depends on a point-inclination for a constant slope (P) of the road (S),
   wherein the calculating step (E2) comprises a series of successive substeps, performed in an iterative manner and comprising:

   • a first calculating substep (E23) consisting of performing a linear regression, by means of a plurality of pairs of measurements, in order to determine a coefficient of proportionality;
   • a second calculating substep (E24) consisting of estimating a point-inclination, from said coefficient of proportionality determined in the first calculating substep (E23);

   **characterised in that** the calculating step (E2) further comprises:

   • a third calculating substep (E25) consisting of calculating an estimation quality value (q) of the point-inclination estimated in the second calculating substep (E24); and
   • a fourth calculating substep (E26) consisting of determining, with each iteration, a current global inclination, from the set of estimation quality values (Q) and point-inclinations calculated and estimated in preceding iterations, the current global inclination calculated in the last iteration representing said global inclination ($\alpha$).

2. The method according to claim 1,
   **characterised in that** the measuring step (E1) also comprises a step (E11) of correcting the values of the vertical acceleration of the pairs of measurements, performed by a correction module (C), in order to obtain and provide in the measuring step (E2) pairs of corrected measurements.

3. The method according to any of claims 1 and 2,
   **characterised in that** the calculating step (E2) also comprises a selection step (E21), performed by a selection module (9) before the first calculating substep (E23), consisting of selecting a plurality of successive pairs of measurements from said pairs of measurements measured in the measuring step (E1) in order to form a data set, said data set being determined by one or more predetermined selection criteria.

4. The method according to claim 3,
   **characterised in that** the selection criterion or criteria of a data set from a succession of pairs of measurements comprises at least one of the following criteria:

   - a number of successive pairs of measurements is greater than a number of predetermined pairs of measurements;
   - a succession of pairs of measurements represents a time range which is lower than a predetermined time limit;
   - the longitudinal acceleration values of successive pairs of measurements are increasing or decreasing;
   - a range of longitudinal acceleration values of pairs of successive measurements is greater than a predetermined variation value;
   - a tolerance value of the temporal regularity of successive measurements of longitudinal accelerations is lower than a predetermined tolerance value.

5. The method according to any claim 3 or claim 4,

**characterised in that** the calculating step (E2) comprises a partitioning step (E22), performed by a partitioning module (10) between the selection step (E21) and the first calculating substep (E23), consisting of partitioning the data set into a plurality of data subsets and calculating the average of the data of each data subset, the averages of the data obtained in this way being used in the first calculating substep (E23) as pairs of measurements.

6. The method according to any of the preceding claims,
   **characterised in that** said fourth calculating substep (E26) consists of determining a value of said global inclination ($\alpha$) by:

   - calculating the weighted average of point-inclinations, said point-inclinations each being weighted by an associated estimation quality value (q), calculated in the third calculating substep (E25); or
   - using a Kalman filter.

7. The method according to any of the preceding claims,
   **characterised in that** the calculating step (E2) comprises a fifth calculating substep (E27) consisting of calculating a global estimation quality from estimation quality values (Q) calculated in preceding iterations.

8. The method according to claim 7,
   **characterised in that** said fifth calculating substep (E27) consists of calculating a value of said global estimation quality, defined by:

   - the sum of the estimation quality values (Q) calculated in the third calculating substep (E24), or
   - the average of the estimation quality values (Q) calculated in the third calculating substep (E24);

   the linear regression, performed in the first substep of the calculating step (E23), is based on a method of the lowest p-percentile of the square of the residuals.

9. The method according to any of the preceding claims,
   **characterised in that** the measuring step (E1) also comprises a step of filtering (E12) pairs of measurements, performed by a filter (F), and consisting, in order to obtain pairs of filtered measurements, of eliminating interference in the measurement of pairs of measurements generated by:

   - statistical noise coming from the accelerometer of the measuring unit (6);

   - vibrations from the engine of the motor vehicle (2);the measuring step consists of also measuring, by means of at least one gyrometer (G), a gyroscopic value, said gyroscopic value measured in the measuring step (E1) being used in the calculating step (E2) at least for eliminating changes in the trajectory of the motor vehicle (2) on the road (S), the gyroscopic value of which is greater than a predetermined threshold value.

10. The method according to any of the preceding claims,
    **characterised in that** it also comprises:

    - an auxiliary calculating step (E3) consisting of calculating a corrective value of a lighting angle of a lamp (3) of the motor vehicle (2) by means of the global inclination ($\alpha$) of the motor vehicle (2) calculated in said calculating step (E2); and
    - a transmission step (E4) consisting of transmitting said correction value to a corrective calculating element (19) able to correct the lighting angle of the lamp (3) of the motor vehicle (2).

11. A device for determining autonomously at least one so-called global inclination of a motor vehicle (2) while driving along a trajectory on a road (S), said global inclination ($\alpha$) illustrating the angle between a reference longitudinal axis of the chassis (X2) of the motor vehicle (2) and a reference longitudinal axis of the road on which the wheels of the axle (X1) of the motor vehicle (2) rest,
    wherein it comprises:

    - a measuring unit (6) comprising at least one set of accelerometers (An), said set of accelerometers (An) comprising at least two accelerometers (A1, A2) arranged on the chassis of a motor vehicle (2), the two accelerometers (A1, A2) being configured to measure over time respectively a so-called longitudinal acceleration and a so-called vertical acceleration of the motor vehicle (2), the measuring unit (6) being configured to measure a plurality of a pair of successive measurements, each pair of measurements comprising a measured longitudinal acceleration and a measured vertical acceleration;

- a calculating unit (7) configured to calculate the global inclination ($\alpha$) of the vehicle (2) exclusively by means of pairs of measurements measured by the measuring unit (6), said calculating unit (7) taking into consideration that the vertical acceleration and the longitudinal acceleration are linked by an affine function for which a coefficient of proportionality depends on a point-inclination for a constant slope (P) of the road (S), wherein the calculating unit (7) comprises:

> • a first calculating element (11) configured to perform a linear regression, by means of a plurality of pairs of measurements in order to determine a coefficient of proportionality;
> • a second calculating element (12) configured to estimate a point-inclination from said coefficient of proportionality determined by the first calculating element (11);

**characterised in that** the calculating unit (7) further comprises:

> • a third calculating element (13) configured to calculate an estimation quality value (q) of the point-inclination estimated by the second calculating element (12); and
> • a fourth calculating element (14) configured to calculate a current global inclination, from the set of estimation quality values (Q) and point-inclinations calculated and estimated during a plurality of successive iterations, the current global inclination calculated in the last iteration representing said global inclination ($\alpha$).

12. The device according to claim 11,
**characterised in that** the calculating unit (7) also comprises:

> - a selection module (9) configured to select a succession of pairs of measurements from said pairs of measurements measured by the measuring unit (6) in order to form a data set, said data set being determined by one or more predetermined selection criteria; and
> - a partitioning module (10) configured to partition the data set into a plurality of data subsets and to calculate the average of the data of each data subset, the averages of data obtained in this way being used by the first calculating element (11) of the calculating unit (7) as pairs of measurements; the calculating unit (7) also comprises a fifth calculating element (21) configured to calculate a global estimation quality from estimation quality values (Q) calculated during a plurality of successive iterations.

13. The device according to any of claims 11 to 12,
**characterised in that** it also comprises:

> - an auxiliary calculating unit (17) configured to calculate a correction value of a lighting angle of a lamp (3) of the motor vehicle (2), by means of the global inclination ($\alpha$) of the motor vehicle (2) calculated by said calculating unit (7); and
> - a transmission link (18) configured to transmit said correction value to at least one corrective calculating element (19) which is able to correct the lighting angle of the lamp (3) of the motor vehicle (2); the measuring unit (6) also comprises at least one of the following elements:

>> - a third accelerometer (A3) configured to measure a lateral acceleration, which is orthogonal to said vertical and longitudinal accelerations;
>> - at least one gyrometer (G).

14. A system for correcting a lighting angle of a lamp of a motor vehicle, **characterised in that** it comprises a device (1) such as specified in claim 13, and at least one corrective calculating element (19) which is able to correct the lighting angle of the lamp (3).

15. A lamp for a motor vehicle,
**characterised in that** it comprises at least one system (20) for correcting the lighting angle, such as specified in claim 14.

**Patentansprüche**

1. Automatisches Verfahren zum Ermitteln mindestens einer sogenannten globalen Neigung eines Motorfahrzeugs (2), wenn auf einer Straße (S) entlang eines Bahnverlaufs gefahren wird, wobei die globale Neigung ($\alpha$) den Winkel zwischen einer Referenzlängsachse des Chassis (X2) des Motorfahrzeugs (2) und einer Referenzlängsachse der Straße (S), auf dem die Räder der Achse (X1) des Motorfahrzeugs (2) liegen, veranschaulicht, wobei das Verfahren umfasst:

   - einen Messungsschritt (E1), der mittels mindestens zweier Beschleunigungsmesser (A1, A2), die auf dem Chassis angeordnet sind, durchgeführt wird, wobei die zwei Beschleunigungsmesser (A1, A2) konfiguriert sind, über die Zeit jeweils eine sogenannte Längsbeschleunigung und eine sogenannte vertikale Beschleunigung des Motorfahrzeugs (2) zu messen, wobei der Messungsschritt aus Messen einer Vielzahl von Paaren aufeinanderfolgender Messungen besteht, wobei jedes Paar von Messungen eine gemessene Längsbeschleunigung und eine gemessene vertikale Beschleunigung umfasst;
   - einen Berechnungsschritt (E2), der von einer Berechnungseinheit (7) durchgeführt wird und aus Berechnen der globalen Neigung (a) des Fahrzeugs (2) ausschließlich mittels Paaren von Messungen, die in dem Messungsschritt (E1) gemessen werden, durchgeführt wird, wobei der Berechnungsschritt (E2) berücksichtigt, dass die vertikale Beschleunigung und die Längsbeschleunigung durch eine affine Funktion verbunden sind, von der ein Proportionalitätskoeffizient von einer Punktneigung für eine konstante Steigung (P) der Straße (S) abhängt,

   wobei der Berechnungsschritt (E2) eine Reihe aufeinanderfolgender Teilschritte umfasst, die auf eine iterative Weise durchgeführt werden und umfassen:

   • einen ersten Berechnungsteilschritt (E23), der aus Durchführen einer linearen Regression mittels einer Vielzahl von Paaren von Messungen besteht, um einen Proportionalitätskoeffizienten zu ermitteln;
   • einen zweiten Berechnungsteilschritt (E24), der aus Schätzen einer Punktneigung aus dem Proportionalitätskoeffizienten besteht, der in dem ersten Berechnungsteilschritt (E23) ermittelt wird;

   **dadurch gekennzeichnet, dass** der Berechnungsschritt (E2) weiter umfasst:

   • einen dritten Berechnungsteilschritt (E25), der aus Berechnen eines Schätzungsqualitätswerts (q) der Punktneigung besteht, die in dem zweiten Berechnungsschritt (E24) geschätzt wird; und
   • einen vierten Berechnungsteilschritt (E26), der aus Ermitteln, mit jeder Iteration, einer aktuellen globalen Neigung aus der Menge von Schätzungsqualitätswerten (Q) und Punktneigungen, die in vorstehenden Iterationen berechnet und geschätzt werden, der aktuellen globalen Neigung besteht, die in der letzten Iteration berechnet wurde, die die globale Neigung (a) darstellt.

2. Verfahren nach Anspruch 1,
   **dadurch gekennzeichnet, dass** der Messungsschritt (E1) auch einen Schritt (E11) zum Korrigieren der Werte der vertikalen Beschleunigung der Paare von Messungen umfasst, der von einem Korrekturmodul (C) durchgeführt wird, um in dem Messungsschritt (E2) Paare von korrigierten Messungen zu erhalten und bereitzustellen.

3. Verfahren nach einem der Ansprüche 1 und 2,
   **dadurch gekennzeichnet, dass** der Berechnungsschritt (E2) auch einen Auswahlschritt (E21) umfasst, der von einem Auswahlmodul (9) vor dem ersten Berechnungsteilschritt (E23) durchgeführt wird, bestehend aus Auswählen einer Vielzahl von aufeinanderfolgenden Paaren von Messungen aus den Paaren von Messungen, die in dem Messungsschritt (E1) gemessen wurden, um einen Datensatz zu bilden, wobei der Datensatz nach einem oder mehreren vorgegebenen Auswahlkriterien ermittelt wird.

4. Verfahren nach Anspruch 3,
   **dadurch gekennzeichnet, dass** das Auswahlkriterium oder die -kriterien eines Datensatzes einer Abfolge von Paaren von Messungen mindestens eines der folgenden Kriterien umfasst/umfassen:

   - eine Zahl von aufeinanderfolgenden Paaren von Messungen ist größer als eine Zahl von vorgegebenen Paaren von Messungen;
   - eine Abfolge von Paaren von Messungen stellt eine Zeitspanne dar, die niedriger als eine vorgegebene Zeitgrenze ist;
   - die Längsbeschleunigungswerte aufeinanderfolgender Paare von Messungen steigen an oder sinken;

- eine Spanne von Längsbeschleunigungswerten von Paaren aufeinanderfolgender Messungen ist größer als ein vorgegebener Schwankungswert;
- ein Toleranzwert der zeitlichen Regelmäßigkeit aufeinanderfolgender Messungen von Längsbeschleunigungen ist niedriger als ein vorgegebener Toleranzwert.

5. Verfahren nach einem von Anspruch 3 oder Anspruch 4, **dadurch gekennzeichnet, dass** der Berechnungsschritt (E2) einen Unterteilungsschritt (E22), der von einem Unterteilungsmodul (10) durchgeführt wird, zwischen dem Auswahlschritt (E21) und dem ersten Berechnungsteilschritt (E23) umfasst, bestehend aus Unterteilen des Datensatzes in eine Vielzahl von Datenteilsätzen und Berechnen des Mittelwerts der Daten von jedem Datenteilsatz, wobei die Mittelwerte der Daten, die auf diese Weise erhalten werden, in dem ersten Berechnungsteilschritt (E23) als Paare von Messungen verwendet werden.

6. Verfahren nach einem der vorstehenden Ansprüche, **dadurch gekennzeichnet, dass** der vierte Berechnungsteilschritt (E26) aus Ermitteln eines Wertes der globalen Neigung (a) besteht durch:

- Berechnen des gewichteten Mittelwerts von Punktneigungen, wobei die Punktneigungen jeweils durch einen zugehörigen Schätzungsqualitätswert (q) gewichtet sind, der in dem dritten Berechnungsteilschritt (E25) berechnet wird; oder
- Verwenden eines Kalman-Filters.

7. Verfahren nach einem der vorstehenden Ansprüche, **dadurch gekennzeichnet, dass** der Berechnungsschritt (E2) einen fünften Berechnungsteilschritt (E27) umfasst, der aus Berechnen einer globalen Schätzungsqualität von Schätzungsqualitätswerten (Q) besteht, die in vorstehenden Iterationen berechnet wurden.

8. Verfahren nach Anspruch 7, **dadurch gekennzeichnet, dass** der fünfte Berechnungsteilschritt (E27) aus Berechnen eines Werts der globalen Schätzungsqualität besteht, definiert durch:

- die Summe der Schätzungsqualitätswerte (Q), die in dem dritten Berechnungsteilschritt (E24) berechnet werden, oder
- den Mittelwert der Schätzungsqualitätswerte (Q), die in dem dritten Berechnungsteilschritt (E24) berechnet werden;

wobei die lineare Regression, die in dem ersten Teilschritt des Berechnungsschritts (E23) durchgeführt wird, auf einem Verfahren des niedrigsten p-Perzentils der Quadrats des Rests basiert.

9. Verfahren nach einem der vorstehenden Ansprüche, **dadurch gekennzeichnet, dass** der Messungsschritt (E1) auch einen Schritt zum Filtern (E12) von Paaren von Messungen umfasst, der von einem Filter (F) durchgeführt wird und, um Paare gefilterter Messungen zu erhalten, aus dem Beseitigen von Interferenz in den Messungen von Paaren von Messungen besteht, die erzeugt werden durch:

- statistisches Rauschen, das von dem Beschleunigungsmesser der Messungseinheit (6) herrührt;
- Schwingungen von dem Motor des Motorfahrzeugs (2); wobei der Messungsschritt auch aus Messen, mittels mindestens eines Gyrometers (G) eines gyroskopischen Werts besteht, wobei der gyroskopische Wert, der in dem Messungsschritt (E1) gemessen wurde, in dem Berechnungsschritt (E2) zumindest verwendet wird, um Änderungen des Bahnverlaufs des Motorfahrzeugs (2) auf der Straße (S) zu beseitigen, deren gyroskopischer Wert größer als ein vorgegebener Schwellenwert ist.

10. Verfahren nach einem der vorstehenden Ansprüche, **dadurch gekennzeichnet, dass** es auch umfasst:

- einen Hilfsberechnungsschritt (E3), der aus Berechnen eines Korrekturwerts eines Leuchtwinkels einer Leuchte (3) des Motorfahrzeugs (2) mittels der globalen Neigung (a) des Motorfahrzeugs (2) besteht, die in dem Berechnungsschritt (E2) berechnet wurde; und
- einen Übertragungsschritt (E4), der aus Übertragen des Korrekturwerts zu einem korrigierenden Berechnungselement (19) besteht, das imstande ist, den Leuchtwinkel der Leuchte (3) des Motorfahrzeugs (2) zu korrigieren.

11. Vorrichtung zum autonomen Ermitteln mindestens einer sogenannten globalen Neigung eines Motorfahrzeugs (2), während entlang eines Bahnverlaufs auf einer Straße (S) gefahren wird, wobei die globale Neigung ($\alpha$) den Winkel zwischen einer Referenzlängsachse des Chassis (X2) des Motorfahrzeugs (2) und einer Referenzlängsachse der Straße, auf der die Räder der Achse (X1) des Motorfahrzeugs (2) liegen, veranschaulicht,
wobei sie umfasst:

- eine Messungseinheit (6), die mindestens einen Satz von Beschleunigungsmessern (An) umfasst, wobei der Satz von Beschleunigungsmessern (An) mindestens zwei Beschleunigungsmesser (A1, A2) umfasst, die auf dem Chassis eines Motorfahrzeugs (2) angeordnet sind, wobei die zwei Beschleunigungsmesser (A1, A2) konfiguriert sind, über die Zeit jeweils eine sogenannte Längsbeschleunigung und eine sogenannte vertikale Beschleunigung des Motorfahrzeugs (2) zu messen, wobei die Messungseinheit (6) konfiguriert ist, eine Vielzahl eines Paars aufeinanderfolgender Messungen zu messen, wobei jedes Paar von Messungen eine gemessene Längsbeschleunigung und eine gemessene vertikale Beschleunigung umfasst;
- eine Berechnungseinheit (7), die konfiguriert ist, die globale Neigung (a) des Fahrzeugs (2) ausschließlich mittels Paaren von Messungen zu berechnen, die von der Messungseinheit (6) gemessen wurden, wobei die Berechnungseinheit (7) berücksichtigt, dass die vertikale Beschleunigung und die Längsbeschleunigung durch eine affine Funktion verbunden sind, für die ein Proportionalitätskoeffizient von einer Punktneigung für eine konstante Steigung (P) der Straße (S) abhängt,

wobei die Berechnungseinheit (7) umfasst:

• ein erstes Berechnungselement (11), das konfiguriert ist, eine lineare Regression mittels einer Vielzahl von Paaren von Messungen durchzuführen, um einen Proportionalitätskoeffizienten zu ermitteln;
• ein zweites Berechnungselement (12), das konfiguriert ist, eine Punktneigung von dem Proportionalitätskoeffizienten zu schätzen, der von dem ersten Berechnungselement (11) ermittelt wurde;

dadurch gekennzeichnet, dass die Berechnungseinheit (7) weiter umfasst:

• ein drittes Berechnungselement (13), das konfiguriert ist, einen Schätzungsqualitätswert (q) der Punktneigung zu berechnen, die von dem zweiten Berechnungselement (12) geschätzt wurde; und
• ein viertes Berechnungselement (14), das konfiguriert ist, eine aktuelle globale Neigung aus dem Satz von Schätzungsqualitätswerten (Q) und Punktneigungen, die während einer Vielzahl aufeinanderfolgender Iterationen berechnet und geschätzt wurden, zu berechnen, wobei die aktuelle globale Neigung, die in der letzten Iteration berechnet wurde, die globale Neigung (a) darstellt.

12. Vorrichtung nach Anspruch 11,
dadurch gekennzeichnet, dass die Berechnungseinheit (7) auch umfasst:

- ein Auswahlmodul (9), das konfiguriert ist, eine Abfolge von Paaren von Messungen von den Paaren von Messungen auszuwählen, die von der Messungseinheit (6) gemessen wurden, um einen Datensatz zu bilden, wobei der Datensatz nach einem oder mehreren vorgegebenen Auswahlkriterien ermittelt wird; und
- ein Unterteilungsmodul (10), das konfiguriert ist, den Datensatz in eine Vielzahl von Datenteilsätzen zu unterteilen und den Mittelwert der Daten von jedem Datenteilsatz zu berechnen, wobei die auf diese Weise erhaltenen Mittelwerte der Daten von dem ersten Berechnungselement (11) der Berechnungseinheit (7) als Paare von Messungen verwendet werden; die Berechnungseinheit (7) auch ein fünftes Berechnungselement (21) umfasst, das konfiguriert ist, eine globale Schätzungsqualität von Schätzungsqualitätswerten (Q) zu berechnen, die während einer Vielzahl von aufeinanderfolgenden Iterationen berechnet wurden.

13. Vorrichtung nach einem der Ansprüche 11 bis 12,
dadurch gekennzeichnet, dass sie auch umfasst:

- eine Hilfsberechnungseinheit (17), die konfiguriert ist, einen Korrekturwert eines Leuchtwinkels einer Leuchte (3) des Motorfahrzeugs (2) mittels der globalen Neigung (a) des Motorfahrzeugs (2) zu berechnen, die von der Berechnungseinheit (7) berechnet wurde; und
- eine Übertragungsverbindung (18), die konfiguriert ist, den Korrekturwert an mindestens ein korrigierendes Berechnungselement (19) zu übertragen, das im Stande ist, den Leuchtwinkel der Leuchte (3) des Motorfahrzeugs (2) zu korrigieren; die Messungseinheit (6) auch mindestens eines der folgenden Elemente umfasst:
- einen dritten Beschleunigungsmesser (A3), der konfiguriert ist, eine seitliche Beschleunigung zu messen, die orthogonal zu der vertikalen und Längsbeschleunigung ist;
- mindestens ein Gyrometer (G).

**14.** System zum Korrigieren eines Leuchtwinkels einer Leuchte eines Motorfahrzeugs,
**dadurch gekennzeichnet, dass** es eine Vorrichtung (1) nach Anspruch 13 und mindestens ein korrigierendes Berechnungselement (19) umfasst, das imstande ist, den Leuchtwinkel der Lampe (3) zu korrigieren.

**15.** Leuchte für ein Motorfahrzeug,
**dadurch gekennzeichnet, dass** sie mindestens ein System (20) zum Korrigieren des Leuchtwinkels nach Anspruch 14 umfasst.

**Revendications**

**1.** Procédé automatique de détermination d'au moins une dite inclinaison globale d'un véhicule à moteur (2) lors d'une conduite le long d'une trajectoire sur une route (S), ladite inclinaison globale ($\alpha$) illustrant l'angle entre un axe longitudinal de référence du châssis (X2) du véhicule à moteur (2) et un axe longitudinal de référence de la route (S) sur laquelle les roues de l'essieu (X1) du véhicule à moteur (2) reposent, ledit procédé comprenant :

- une étape de mesure (E1) effectuée au moyen d'au moins deux accéléromètres (A1, A2) agencés sur le châssis, les deux accéléromètres (A1, A2) étant configurés pour mesurer au fil du temps, respectivement, une dite accélération longitudinale et une dite accélération verticale du véhicule à moteur (2), l'étape de mesure consistant à mesurer une pluralité de paires de mesures successives, chaque paire de mesures comprenant une accélération longitudinale mesurée et une accélération verticale mesurée ;
- une étape de calcul (E2) effectuée par une unité de calcul (7) et consistant à calculer l'inclinaison globale ($\alpha$) du véhicule (2) exclusivement au moyen de paires de mesures mesurées dans l'étape de mesure (E1), ladite étape de calcul (E2) tenant compte du fait que l'accélération verticale et l'accélération longitudinale sont liées par une fonction affine dont un coefficient de proportionnalité dépend d'une inclinaison ponctuelle pour une pente constante (P) de la route (S),

dans lequel l'étape de calcul (E2) comprend une série de sous-étapes successives effectuées de manière itérative et comprenant :

• une première sous-étape de calcul (E23) consistant à effectuer une régression linéaire, au moyen d'une pluralité de paires de mesures, afin de déterminer un coefficient de proportionnalité ;
• une deuxième sous-étape de calcul (E24) consistant à estimer une inclinaison ponctuelle à partir dudit coefficient de proportionnalité déterminé dans la première sous-étape de calcul (E23) ;

**caractérisé en ce que** l'étape de calcul (E2) comprend en outre :

• une troisième sous-étape de calcul (E25) consistant à calculer une valeur de qualité d'estimation (q) de l'inclinaison ponctuelle estimée dans la deuxième sous-étape de calcul (E24) ; et
• une quatrième sous-étape de calcul (E26) consistant à déterminer, avec chaque itération, une inclinaison globale courante, à partir de l'ensemble de valeurs de qualité d'estimation (Q) et d'inclinaisons ponctuelles calculées et estimées dans les itérations précédentes, l'inclinaison globale courante calculée dans la dernière itération représentant ladite inclinaison globale ($\alpha$).

**2.** Procédé selon la revendication 1,
**caractérisé en ce que** l'étape de mesure (E1) comprend également une étape (E11) pour corriger les valeurs de l'accélération verticale des paires de mesures, effectuée par un module de correction (C), afin d'obtenir et de fournir dans l'étape de mesure (E2) des paires de mesures corrigées.

**3.** Procédé selon l'une quelconque des revendications 1 et 2,
**caractérisé en ce que** l'étape de calcul (E2) comprend également une étape de sélection (E21) effectuée par un module de sélection (9) avant la première sous-étape de calcul (E23) consistant à sélectionner une pluralité de paires successives de mesures parmi lesdites paires de mesures mesurées dans l'étape de mesure (E1) afin de former un ensemble de données, ledit ensemble de données étant déterminé par un ou plusieurs critères de sélection prédéterminés.

4. Procédé selon la revendication 3,
**caractérisé en ce que** le ou les critère(s) de sélection d'un ensemble de données à partir d'une succession de paires de mesures comprend ou comprennent au moins l'un des critères suivants :

- un nombre de paires successives de mesures est supérieur à un nombre de paires prédéterminées de mesures ;
- une succession de paires de mesures représente une plage de temps qui est inférieure à une limite de temps prédéterminée ;
- les valeurs d'accélération longitudinale de paires successives de mesures augmentent ou diminuent ;
- une plage de valeurs d'accélération longitudinale de paires de mesures successives est supérieure à une valeur de variation prédéterminée ;
- une valeur de tolérance de la régularité temporelle de mesures successives d'accélérations longitudinales est inférieure à une valeur de tolérance prédéterminée.

5. Procédé selon l'une quelconque de la revendication 3 ou de la revendication 4,
**caractérisé en ce que** l'étape de calcul (E2) comprend une étape de cloisonnement (E22) effectuée par un module de cloisonnement (10) entre l'étape de sélection (E21) et la première sous-étape de calcul (E23), consistant à cloisonner l'ensemble de données en une pluralité de sous-ensembles de données et à calculer la moyenne des données de chaque sous-ensemble de données, les moyennes des données obtenues de cette manière étant utilisées dans la première sous-étape de calcul (E23) comme paires de mesures.

6. Procédé selon l'une quelconque des revendications précédentes,
**caractérisé en ce que** ladite quatrième sous-étape de calcul (E26) consiste à déterminer une valeur de ladite inclinaison globale ($\alpha$) :

- en calculant la moyenne pondérée d'inclinaisons ponctuelles, lesdites inclinaisons ponctuelles étant chacune pondérées par une valeur de qualité d'estimation associée (q) calculée dans la troisième sous-étape de calcul (E25) ; ou
- en utilisant un filtre de Kalman.

7. Procédé selon l'une quelconque des revendications précédentes,
**caractérisé en ce que** l'étape de calcul (E2) comprend une cinquième sous-étape de calcul (E27) consistant à calculer une qualité d'estimation globale à partir de valeurs de qualité d'estimation (Q) calculées dans les itérations précédentes.

8. Procédé selon la revendication 7,
**caractérisé en ce que** ladite cinquième sous-étape de calcul (E27) consiste à calculer une valeur de ladite qualité d'estimation globale définie par :

- la somme des valeurs de qualité d'estimation (Q) calculées dans la troisième sous-étape de calcul (E24) ou
- la moyenne des valeurs de qualité d'estimation (Q) calculées dans la troisième sous-étape de calcul (E24) ;

la régression linéaire effectuée dans la première sous-étape de l'étape de calcul (E23) est basée sur un procédé du pourcentage p le plus bas du carré des résidus.

9. Procédé selon l'une quelconque des revendications précédentes,
**caractérisé en ce que** l'étape de mesure (E1) comprend également une étape de filtrage (E12) de paires de mesures effectuée par un filtre (F) et consistant, afin d'obtenir des paires de mesures filtrées, à éliminer une interférence dans la mesure de paires de mesures générée par :

- du bruit statistique venant de l'accéléromètre de l'unité de mesure (6) ;
- des vibrations venant du moteur du véhicule à moteur (2) ;

l'étape de mesure consiste à mesurer également, au moyen d'au moins un gyromètre (G), une valeur gyroscopique, ladite valeur gyroscopique mesurée dans l'étape de mesure (E1) étant utilisée dans l'étape de calcul (E2) au moins pour éliminer les changements de trajectoire du véhicule à moteur (2) sur la route (S), dont la valeur gyroscopique est supérieure à une valeur de seuil prédéterminée.

10. Procédé selon l'une quelconque des revendications précédentes,
   **caractérisé en ce qu'**il comprend également :

   - une étape de calcul auxiliaire (E3) consistant à calculer une valeur correctrice d'un angle d'éclairage d'une lampe (3) du véhicule à moteur (2) au moyen de l'inclinaison globale ($\alpha$) du véhicule à moteur (2) calculée dans ladite étape de calcul (E2) ; et
   - une étape de transmission (E4) consistant à transmettre ladite valeur de correction à un élément de calcul correcteur (19) qui est à même de corriger l'angle d'éclairage de la lampe (3) du véhicule à moteur (2).

11. Dispositif pour déterminer de manière autonome au moins une dite inclinaison globale d'un véhicule à moteur (2) au cours d'une conduite le long d'une trajectoire sur une route (S), ladite inclinaison globale ($\alpha$) illustrant l'angle entre un axe longitudinal de référence du châssis (X2) du véhicule à moteur (2) et un axe longitudinal de référence de la route sur laquelle les roues de l'essieu (X1) du véhicule à moteur (2) reposent,
   dans lequel il comprend :

   - une unité de mesure (6) comprenant au moins un ensemble d'accéléromètres (An), ledit ensemble d'accéléromètres (An) comprenant au moins au moins deux accéléromètres (A1, A2) agencés sur le châssis d'un véhicule à moteur (2), les deux accéléromètres (A1, A2) étant configurés pour mesurer au fil du temps, respectivement, une dite accélération longitudinale et une dite accélération verticale du véhicule à moteur (2), l'unité de mesure (6) étant configurée pour mesurer une pluralité de paires de mesures successives, chaque paire de mesures comprenant une accélération longitudinale mesurée et une accélération verticale mesurée ;
   - une unité de calcul (7) configurée pour calculer l'inclinaison globale ($\alpha$) du véhicule (2) exclusivement au moyen de paires de mesures mesurées par l'unité de mesure (6), ladite unité de calcul (7) tenant compte du fait que l'accélération verticale et l'accélération longitudinale sont liées par une fonction affine dont un coefficient de proportionnalité dépend d'une inclinaison ponctuelle pour une pente constante (P) de la route (S),

   dans lequel l'unité de calcul (7) comprend :

   • un premier élément de calcul (11) configuré pour effectuer une régression linéaire, au moyen d'une pluralité de paires de mesures, afin de déterminer un coefficient de proportionnalité ;
   • un deuxième élément de calcul (12) configuré pour estimer une inclinaison ponctuelle à partir dudit coefficient de proportionnalité déterminé dans le premier élément de calcul (11) ;

   **caractérisé en ce que** l'unité de calcul (7) comprend en outre :

   • un troisième élément de calcul (13) configuré pour calculer une valeur de qualité d'estimation (q) de l'inclinaison ponctuelle estimée par le deuxième élément de calcul (12) ; et
   • un quatrième élément de calcul (14) configuré pour calculer une inclinaison globale courante, à partir de l'ensemble de valeurs de qualité d'estimation (Q) et d'inclinaisons ponctuelles calculées et estimées au cours d'une pluralité d'itérations successives, l'inclinaison globale courante calculée dans la dernière itération représentant ladite inclinaison globale ($\alpha$).

12. Dispositif selon la revendication 11,
   **caractérisé en ce que** l'unité de calcul (7) comprend également :

   - un module de sélection (9) configuré pour sélectionner une succession de paires de mesures parmi lesdites paires de mesures mesurées par l'unité de mesure (6) afin de former un ensemble de données, ledit ensemble de données étant déterminé par un ou plusieurs critères de sélection prédéterminés ; et
   - un module de cloisonnement (10) configuré pour cloisonner l'ensemble de données en une pluralité de sous-ensembles de données et calculer la moyenne des données de chaque sous-ensemble de données, les moyennes de données obtenues de cette manière étant utilisées par le premier élément de calcul (11) de l'unité de calcul (7) comme paires de mesures; l'unité de calcul (7) comprend également un cinquième élément de calcul (21) configuré pour calculer une qualité d'estimation globale parmi les valeurs de qualité d'estimation (Q) calculées au cours d'une pluralité d'itérations successives.

13. Dispositif selon l'une quelconque des revendications 11 à 12,

**caractérisé en ce qu'**il comprend également :

- une unité de calcul auxiliaire (17) configurée pour calculer une valeur de correction d'un angle d'éclairage d'une lampe (3) du véhicule à moteur (2) au moyen de l'inclinaison globale (a) du véhicule à moteur (2) calculée par ladite unité de calcul (7) ; et
- une bielle de transmission (18) configurée pour transmettre ladite valeur de correction à au moins un élément de calcul correcteur (19) qui est à même de corriger l'angle d'éclairage de la lampe (3) du véhicule à moteur (2) ; l'unité de mesure (6) comprend également au moins l'un des éléments suivants :

   - un troisième accéléromètre (A3) configuré pour mesurer une accélération latérale qui est orthogonale auxdites accélérations verticale et longitudinale ;
   - au moins un gyromètre (G).

14. Système de correction d'un angle d'éclairage d'une lampe d'un véhicule à moteur,
**caractérisé en ce qu'**il comprend un dispositif (1) tel que spécifié dans la revendication 13 et au moins un élément de calcul correcteur (19) qui est à même de corriger l'angle d'éclairage de la lampe (3).

15. Lampe pour un véhicule à moteur,
**caractérisée en ce qu'**elle comprend au moins un système (20) pour corriger l'angle d'éclairage, comme spécifié dans la revendication 14.

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2724889 A
- EP 2963385 A1
- EP 2447127 A2
- GB 2536008 A